# EUROPEAN PATENT APPLICATION

(11) **EP 2 354 111 A1**
(43) Date of publication of application: **10.08.2011**
(21) Application number: 10152821.4
(22) Date of filing: 05.02.2010
(51) Int. Cl.: C05F 17/02, F16K 24/04

(54) **Composting Apparatus**

(71) Applicant: Callaghan, Mr.Anthony Gerard, Morpeth Northumberland NE61 3RA (GB)
(72) Inventor: Callaghan, Mr.Anthony Gerard, Morpeth Northumberland NE61 3RA (GB)
(74) Representative: Vinsome, Rex Martin

(57) **Abstract**

A composting apparatus (100) having a body portion (102) defining a first volume (104) for receiving material to enable aerobic composting thereof is disclosed. The body portion has an outer lid (116) for enabling material to be placed in the first volume, and gas at higher than ambient temperature resulting from composting of the material can exit from the body portion, and air at ambient temperature can enter the body portion, when the lid is in its closed condition. A pipe (132) transports air at ambient temperature from a first location within the body portion to a second location below the first volume by means of gas at higher than ambient temperature, resulting from compositing of the material, rising in the first volume.

## Description

The present invention relates to composting apparatus and relates particularly, but not exclusively, to mobile composting apparatus.

In the United Kingdom, most people carry out the practice of putting food waste into airtight plastic bags and throwing these bags into a closed black wheelie bin to be taken away to landfill as quickly as possible. Every year, tens of millions of tonnes of domestic biodegradable organic waste e.g. food scraps, are transported to and disposed of in landfill sites. In landfill, organic waste decomposes anaerobically generating methane gas. Methane has 24 times greater impact on global warming than CO₂. The European Economic Community (EEC) landfill directives (1999/31/EEC) and the UK Waste Strategy 2007 target a further 50% reduction in landfill from the 2000 levels by 2020. In addition, United Kingdom landfill capacity is in short supply, and the cost of disposing to landfill incurred by local councils, and therefore the tax payer, is increasing by approximately 20% each year.

To move towards the EEC target, the United Kingdom has introduced a number of food and green waste collection schemes combined with recycling in central composting, anaerobic digestion or biogas sites. Food waste is approximately 80% water and this water has to be transported to, and then removed at, the central site. Heat produced by composting bacteria can be used to remove 15-70% of the water weight prior to collection. The bacteria need oxygen/air and this in turn requires puncturing aeration holes into wheelie bins. Such holes attract vermin and flies.

An alternative to collecting food and green waste for central recycling is for domestic consumers to compost the material at home. Domestic composting is difficult as UK temperature and weather conditions favour 'cold' composting in the mesophilic bacteria stage. 'Cold' composting is slow, and can take anywhere from 6 months to 2 years to decompose waste into a useable soil conditioner. If the material is not turned and aerated, the heap can become anaerobic and release noxious odours. Compost bins generally have aeration holes, and these tend to attract vermin and flies.

To ensure pathogens are killed, the UK Department for Environment, Food and Rural Affairs has regulations on recycling Category 2 and 3 (mixed food waste) stipulating that it has to be composted using in vessel' systems capable of reaching 70°C for at least 1 hour (or 60°C for 6 hours) - i.e. 'hot' composting in the thermophilic range. More complex composting units address some of the vermin, odour and temperature problems, but at a cost which is prohibitively expensive for mass adoption.

Controlled aerobic 'hot' (>60C) composting has the advantages of reducing waste quickly (within days), negligible foul odours, while killing pathogens and producing little or no methane. However, high temperature aerobic composting is difficult to achieve because it requires the correct levels of moisture, temperature, aeration (supply of oxygen), drying (supply of air), particle size, pH level and ratio of carbon to nitrogen in the source materials.

Control of temperature is critical to composting speed and results. If heat is retained in the composting heap, thermophilic bacteria take over within the 35-65°C range and 'hot' composting occurs. `Hot' composting is efficient at reducing plant mass quickly, as summarised in Table 1 below:

**Table 1**

| Method | Temperature | Days to compost |
|---|---|---|
| Cold | 10C (UK annual average) | 360 days |
| Hot | 35C | 90 days |
| Hot | 60C | 11 days |

However, temperature levels can be dramatically influenced by the prevailing weather. For example, in the United Kingdom, few compost bins are adequately protected from cooling cold air currents.

The walls or skins of many existing composting apparatus appear to lose heat by conductive, convective and radiant heat loss. Typical plastic layers alone are not enough to retain the device at the 35-60°C range. Furthermore, many thermally insulated compost bins negate the value of their insulation by adding excessive aeration holes, resulting in rapid convectional cooling through the gaps in walls (rather than conductive cooling through the insulated wall). Few compost bins control the upward heat loss through lids and none appear to address the considerable radiant heat loss which occurs at 60C.

As the composting bacteria grow and reproduce, they oxidise organic material and release energy as heat. If this heat is retained in the system, then in accordance the Arrhenius equation, the rate of reaction will double with each 10C increase in temperature (until the limit of enzyme/protein stability at 70-75C is reached). There is a lag in temperature gain aligned to population growth. This lag can be many days or weeks if the waste enters the heap at low temperature (e.g. -5 to 15C).

Devices known as compost accelerators are commercially available and generally fall into three categories, i.e. using (i) small particles of readily digestible food (e.g. dried and crushed seaweed, or plants such as comfrey), (ii) bacterial inoculators (e.g. bacteria spores which will develop once added to water/food), or (iii) enzymes (biological catalysts). These all assume one or more of these reactant ingredients is limiting the rate of reaction and hence development of the composting bacteria. In most circumstances, it is the temperature of the waste that acts as the rate limiter. Consequently, if the waste/heap is not already warm, regardless of addition of accelerators, the heap will lag and warm slowly.

Control of moisture level is also essential because aerobic composting slows if the moisture content drops below about 60% i.e. the heap dries out. However, if too much water is present, the system becomes anaerobic and odorous. To achieve the desired 60% moisture content, typically 800g of water per Kg of food waste has to be removed. Water will evaporate in a hot compost heap, and condense and drain to ground in a cold compost heap. Moisture levels can be influenced by the prevailing weather. Few heaps are adequately protected from rain, or control the drying affects of sun and warm/cold winds.

Many compost bins will have a leachate tray and/or leachate draining pipe/exit. Leachate collection and run off can create problems with manufacturing complexity, odour and pollution as liquid is 'nitrogen rich'.

Manufacturing large (e.g. 100-1000 litre) plastic containers at low cost requires large and expensive injection moulding tooling and large quantities (i.e. several Kg) of plastic material. Insulating and lining such a container with another large container adds cost and complexity to the manufacturing process. Finding novel ways to utilise existing mass produced containers and or reduce the size of containers adds significant advantage.

Many different sizes of compost bin are needed to cater for the varying amounts of garden and kitchen waste. Present compost bins are geared for use with large volumes of garden waste and are poorly equipped to deal with retaining 60C temperatures in small daily additions of food waste.

Oxygen is essential for aerobic composting; the bacteria require a stoichiometric amount for each Kg of organics consumed. The stoichiometric amount of oxygen (litres) is significantly less than the volume (litres) of air required to transport water vapour out of the heap (i.e. to dry the compost and maintain the optimal 60% moisture level). Serious home gardeners aerate by periodically turning the whole composting material with a fork, which is laborious, time-consuming and not user-friendly. Tumbling and rotary action composters are also available to aerate the heap, but they are expensive. Industrial scale systems may use augers, forced aeration systems and bulking agents to control free air space and the movement of air between particles. However, the cost of such apparatus means that they can not be readily adapted to a scale suitable for domestic use.

Particle size of waste affects its speed of composting. Published material generally refers to an increase in composting speed with smaller particle size and layering of green (nitrogen rich waste) and browns (carbon rich waste). Some text refers to a minimum particle size of 6-10mm, noting that below this the heap compacts, oxygen diffusion decreases and the system can become anaerobic.

Some publications indicate that controlling the Carbon/Nitrogen (C/N) ratio between 20 and 30:1 is critical to successful composting. Typically, gardeners control the mix (ratio) of the feedstock by adding layers of 'green' (nitrogen rich) and 'brown' (carbon rich) garden waste to the compost bin. However, this can be a difficult and laborious process.

Common static garden and home composting units e.g. tumbler/cylinders, wooden or plastic boxes and plastic cones, are sited permanently on the ground. They are emptied from heap to barrow using a fork or spade, and the barrow is then wheeled to location for spreading. This is laborious, time-consuming and not user-friendly.

Preferred embodiments of the present invention seek to overcome one or more of the above disadvantages of the prior art.

According to the present invention, there is provided a composting apparatus comprising:
(i) a container defining at least one first volume for receiving material to enable aerobic composting of said material;
(ii) access means having a first condition for enabling said material to be placed in at least one said first volume and a second condition preventing access to the or each said first volume, and wherein gas at higher than ambient temperature resulting from composting of said material can exit from the container, and air at ambient temperature can enter the container, when said access means is in said second condition; and
(iii) air duct means for transporting air at ambient temperature from a first location within said container to a second location below at least one said first volume by means of gas at higher than ambient temperature, resulting from compositing of said material, rising in at least one said first volume.

By providing air duct means for transporting air at ambient temperature from a first location within said container to a second location below at least one said first volume by means of rising gas at higher than ambient temperature, this provides the advantage of enabling a low cost, low maintenance apparatus for aerobic composting to be produced, since the use of significant numbers of moving parts having narrow manufacturing tolerances is avoided. In addition, by providing access means having a first condition for enabling said material to be placed in at least one said first volume and a second condition preventing access to the or each said first volume, wherein gas at higher than ambient temperature can exit from the container, and air at ambient temperature can enter the container, when said access means is in said second condition, the advantage is also provided of preventing vermin such as rats and flies from entering the apparatus via the air duct means, since the air duct means does not need to be accessible to the exterior of the container.

The container may comprise a body having inner and outer walls having thermal insulation means arranged therebetween.

This provides a cost effective way of maintaining the elevated temperatures required for composting in at least one said first volume.

The thermal insulation means may comprise air sealed between said inner and outer walls.

This provides the advantage of providing low cost, effective thermal insulation while at the same time enabling manufacture of the device to be simplified. For example, the inner wall can be provided with a flange and placed inside the outer wall, and the two components then welded or otherwise attached together.

The apparatus may further comprise at least one cover member for covering at least one said first volume.

At least one said cover member may be moveable relative to the container.

This provides the advantage of enabling the size of at least one said first volume to be adjusted.

At least one said cover member may be slidably mounted to said air duct means.

This provides the advantage of simplifying construction of the apparatus.

At least one said cover member may comprise vent means for enabling gas at higher than ambient temperature to exit at least one said first volume.

The vent means may have at least one adjustable aperture.

This provides the advantage of enabling the rate of flow of hot gases out of the first volume to be adjusted, which in turn enables the rate of composting to be adjusted. Once the aperture size has been set, this provides the advantage that the volume of air flow is self-regulated to reach the desired 60C. As bacterial activity increases, more heat is generated, increasing the temperature gradient, which increases the flow in and this reaches a balance with the convectional cooling as it leaves.

In a preferred embodiment, said vent means comprises at least one first vent member having a plurality of first apertures and at least one second vent member having at least one second aperture, wherein the position of at least one said first vent member and at least one said second vent member are adjustable relative to each other to enable the area of overlap of at least one pair of said first and second said apertures to be adjusted.

At least one said cover member may be adapted to engage an inner wall of the container so as to form a seal therewith.

This provides the advantage of assisting thermal insulation of at least one said first volume, since cold air (i.e. above the cover member) can cool the top of the compost heap. A further advantage is provided in that most large plastic containers contain a draught to enable the containers to be removed from the injection moulding. The walls taper, creating a smaller size of aperture at bottom versus top.

The apparatus may further comprise at least one air flow member for enabling air to pass through at least one said first volume.

This provides the advantage of minimising the extent to which compaction of the material to be composted causes the composting process to become anaerobic.

At least one said air flow member may comprise at least one corrugated plate.

The apparatus may further comprise at least one perforated support for supporting material to be composted and to enable liquid to drain through the support.

This provides the advantage of enabling leachate to drain from the composting process, which in turn reduces the extent to which the process becomes anaerobic.

At least one said support may define a drainage cavity for receiving liquid below at least one said first volume.

This provides the advantage of retaining the leachate in the vicinity of the composting process, which in turn enables moisture in the leachate to evaporate if the moisture content of the composting material should become too low.

The apparatus may further comprise at least one wheel mounted to the container.

This provides the advantage of enabling the apparatus to be easily transported to a place where compost is required to be deposited or collected, for example by a municipal collection system.

A preferred embodiment of the invention will now be described, by way of example only and not in any limitative sense, with reference to the accompanying drawings in which:-
Figure 1 illustrates a cross sectional perspective side view of a mobile composting apparatus embodying the present invention;
Figure 2 is an exploded view of a cover member of the apparatus of Figure 1; and
Figure 3 is a cross sectional side view of a heater for use with the apparatus of Figure 1.

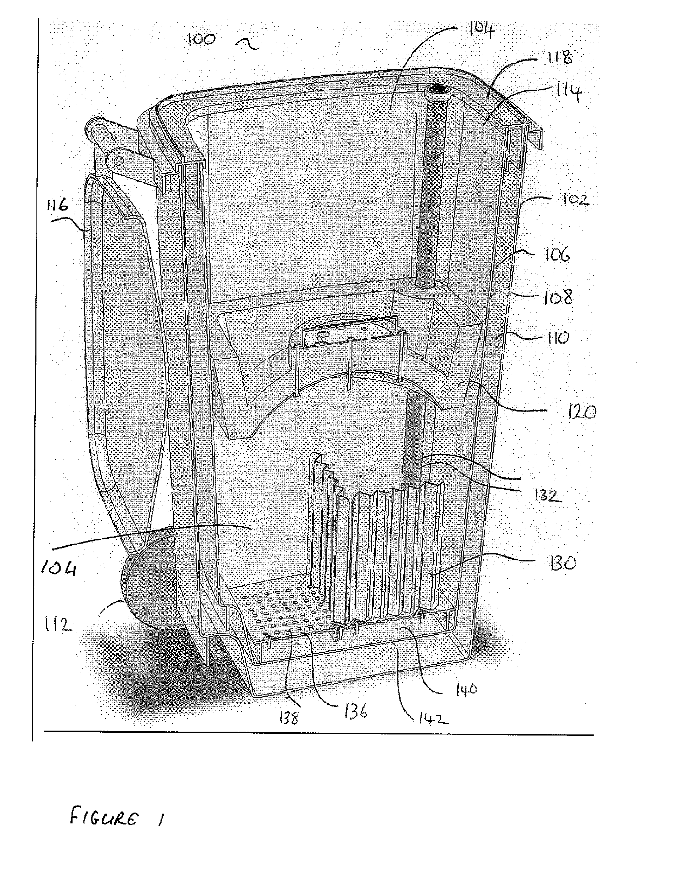

Figure 1 illustrates a mobile composting apparatus 100 of the present invention. The composting apparatus 100 has a body portion 102, to which two wheels 112 are mounted, defining a first volume 104 for receiving material (not shown) for composting.

The side walls of the body portion 102 are made of inner and outer wall portions 106, 108 respectively, between which is housed an insulating layer 110. Using the building regulation definitions of thermal resistivity (R) and thermal transfer coefficient (U), the insulating layer 110 typically has a high thermal resistivity (R) e.g. 0.5 to 1.2 or better, so a layer of 30-100mm provides a thermal coefficient (U) in the range of 0.4 to 0.8. Still air is a good thermal insulator, and when the air is sealed between the two walls 106, 108, the air acts as thermal insulation.

A radiant heat barrier (not shown) made from aluminium foil or aluminium foil welded to polyethylene bubble-wrap can also be added between the walls. Such a layer will reflect radiant heat back into the air gap. Alternatively, standard building insulation materials (for example as sold under the trade mark Rockwool, expanded polystyrene sheets, and polyurethane foam) of approximately 50mm depth may be utilised to provide sufficient insulation. The insulating layer 110 is sealed between inner and outer walls 106, 108 of the body portion 102 to protect the insulation layer 110 from absorbing water vapour and condensation generated within the first volume 104, because such absorbance would reduce insulation capability.

The body portion 102 may be a wheelie bin, (for example 80, 120, 240, 360, 1100L), or a container manufactured from plastic e.g. high density polyethylene (HDPE) to create a rigid container. Alternatively, the whole inner portion of the apparatus 100, i.e. everything enclosed by the outer wall 108 of the body portion, can be made from a single polystyrene insert. The insulation layer 110 can either be added during manufacture of such a wheelie bin, or it may be created separately and inserted into existing wheelie bins.

The body portion 102, the inner wall 106 and outer wall 108 are connected via flange 118. Flange 118 is designed with close tolerances, such that it can create an air tight seal. The robustness is further enhanced via plastic screw fittings (not shown).

The body portion 102 has a first aperture 114 for enabling insertion of material to be composted into the first volume 104, after removal of an inner cover member 120. The first aperture 114 can be closed by an outer lid 116, which is provided with small holes (not shown) to enable hot gases generated by the composting process to pass through the lid 116, while preventing flies from entering the container.

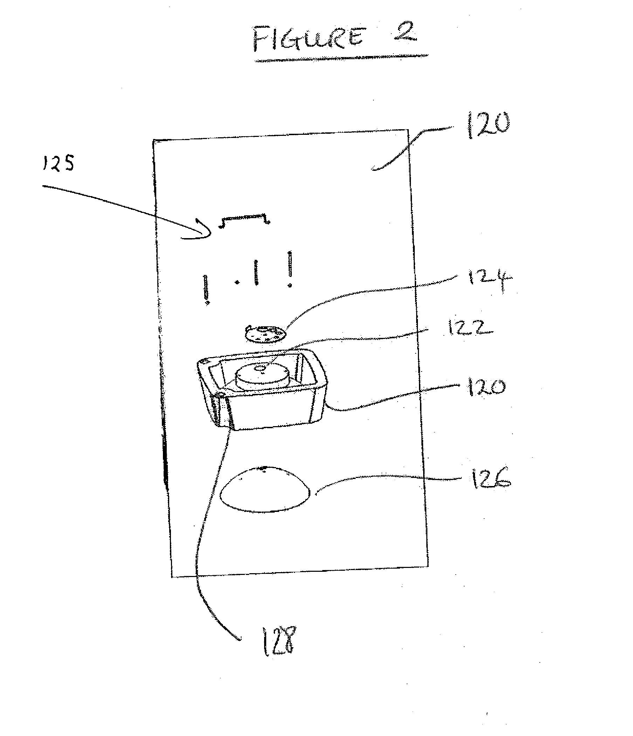

The cover member 120 is a component of the aeration system. Referring to figure 2, it is made from an insulating material similar to the body portion 102, or from foamed polyethylene. The inner cover member 120 is constructed to allow the escape of hot air saturated with water vapour generated in composting out via aperture 122. Seated above the aperture is a flow regulator plate 124. This plate has a number of varying sized holes. By turning the regulator plate over the aperture 122, aperture 122 can be reduced to a minimum or opened to a maximum size. These sizes are correlated to different flow rates needed for small continuous loads of food waste or large batch loads of garden waste. The cover member 120 is formed from thermally insulating foam material such as polystyrene, and is provided with back cuts 128 to enable the cover member 120 to form a seal with the inner walls 106 of the container.

With further reference to figure 2, the cover member 120 is fitted with a radiant heat barrier 126 formed from a material such as aluminium foil, Mylar, Al-bubble wrap, or a mirrored metal plate provided on the lower side of cover member 120. The heat barrier 126 has an aperture therethrough for communication with the aperture 122,. Such a sheet reflects heat back directly onto the upper food waste layer, ensuring the upper layer is retained at maximum composting temperature. Cover member 120 has a handle 125 to aid removal, and the handle 125 can be secured to the cover member 120 by means of nuts and bolts or like.

A rake (not shown) may also be provided to rake or stir the upper layers of compost. Raking the compost with the rake or stick will help prevent the creation offensive odours because it encourages aerobic decomposition of material in the first volume 104 to take place. However, used in a domestic collection service, the apparatus 100 must cope with many user scenarios, one of which will be that some users will not stir the compost. To cope with this the inner cover member 120 can be fitted with two filter layers, one being activated carbon, to remove any volatile organic compounds, the other being a layer of Zeolite, to remove ammonia produced by decomposing grass cuttings.

With reference to figure 1, a base plate 134 has a plurality of apertures 138 extending through it, adjacent a bottom inner surface 142 of the part forming the inner wall 106 of the container. The apertures 138 are sufficiently wide to allow fluid to drain away under the force of gravity from within material placed in the first volume 104. Such fluid, known as leachate, is drained into a fluid retention portion 140 between the base plate 134 and bottom inner surface 142 of the container. Fluid is retained in the fluid retention portion 140 which therefore acts as a leachate reservoir. There is enough volume in the leachate reservoir to create a pool of leachate. This can be emptied when compost is removed from the apparatus 100. The pool of leachate will also vaporise if the compost begins to dry out, helping to maintain the moisture ratio at approximately 60%.

The heat released during aerobic composting is used to create a 'chimney effect' that draws cooler air/oxygen up from the fluid retention portion 140, through base plate 136 and up through volume 104, being expelled as warm air/water vapour/CO2 out through the aperture/flow regulator 122 in inner cover member 120 and outer lid 116.

Air is drawn down into the fluid retention portion 140 via pipe 132. Pipe 132 is insulated with polyethylene foam insulation or pipe insulation wrap to ensure the air remains cooler than the compost material. By using this configuration air can be drawn continuously from the atmosphere under outer lid 116 and into the pipe 132. No direct access of the pipe 132 to the outside is required.

Oxygen circulation is assisted via raking the top layer of new waste. However, if the materials are too soft and small the weight compresses the pile. As a result the pathways for oxygen transport may be reduced and the pile becomes anaerobic. A corrugated or fluted aeration plate 130 is located on the base plate 136. The flutes are so constructed that the compost is unable to collect in the corners of the flutes. These areas then act as air transport through the lower more compressed layers. Water vapour also condenses or vaporises on the high surface area plate depending on the temperature of the compost in the lower part of volume 104. Aeration plate 130 is normally made from rigid plastics, but could also be metal.

The outer lid 116 of the body portion 102 (wheelie bin/container) is modified to contain enough small holes to allow the required vapour to escape, but which are small enough to prevent flies entering. In another arrangement the air flow out from the top of the apparatus can be constructed by aligning the lip on the walls of the body portion 102 and the lip on the outer lid 116 to create an air-gap.

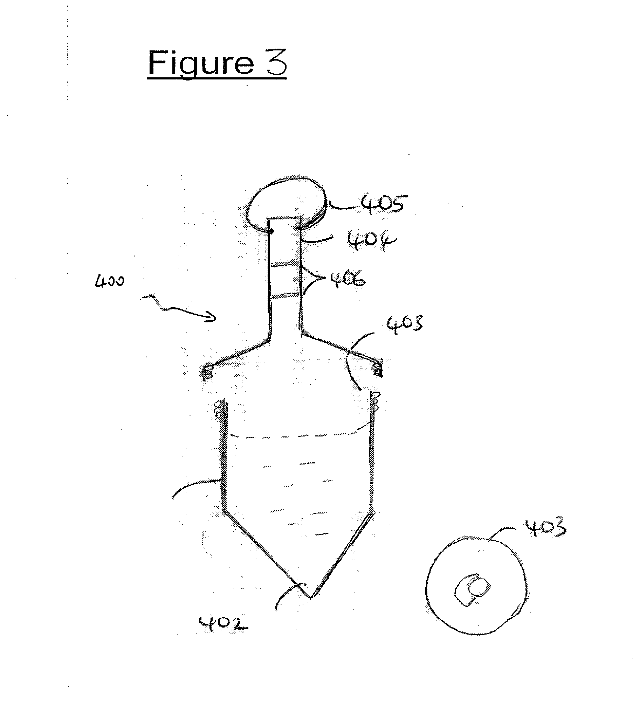

Referring to figure 3, a compost accelerator 400 for use with the apparatus 100 is shown. The compost accelerator 400 comprises a container 401 made from heat resistant material of volume 0.5-1.5 1 with conical base 402, and has an aperture 403 to allow filling of the container 401 with boiling water. A container lid 404 is connected by means of a screw fit to container 401, such that the fitting is vapour tight. Lid 404 has a long shaft with hand grips 406 to push downward, i.e. acting as a plunger. A grip/handle 405 is provided to retrieve the device 400 from the compost mass.

The apparatus 100 may also be fitted with a sensor (not shown) for monitoring at least one of the temperature, moisture level, oxygen level and pH within the first volume 104, the value of which may be displayed on a screen (not shown) mounted to the body portion 102 or outer lid 116. The apparatus 100 may also be fitted with a transmission device (not shown) for emitting to a remote device electromagnetic signals indicative of the parameters monitored by the sensor.

For both gardening experts and the general public, controlling the composting process to maintain an effective rate of decomposition is difficult. Sensors for temperature, moisture, oxygen, and pH are variously available to specialists and industrial composters. However, the apparatus 100 is fitted with an instruction indication device for translating these technical measures into a simple set of user directions based on a simple traffic light colour coded system which is displayed to the user, as shown in Table 2 below:

### Example:

**Table 2**

| | Red 1 | Amber 1 | Green | Amber 2 | Red 2 |
|---|---|---|---|---|---|
| Action | Add moist food waste (with no wood shavings) Stir 6 times | Stir 6 times Continue to add food waste daily (no wood shavings) | Continue to add food waste daily and stir twice | Add 3 cups of wood shavings Stir 6 times | Heap anaerobic Add 6 cups of wood shavings only (no food waste). Stir vigorously at least 6 times. Blow air (using vacuum or garden blower (see directions). |
| Next step | Check in 2 days for amber | Check in 2 days for green | Check in 2 days still green | Check in 2 days for green | Check in 2 days for amber |

Such an instruction indication device can be either conveniently located on the outer lid 116, or located in the user household and linked via an RFID transmitter.

For those wishing to retain and use the compost, the display can be transferred to a computer and used to monitor progress.

The composting apparatus 100 of the present invention preferably uses standard specification wheelie bins as the body portion 102. They can therefore be collected by the existing worldwide municipal waste collection system of wheelie bins that are lifted and emptied onto adapted lorry/vehicles.

In one convenient arrangement, the 'in-vessel' regulatory conditions of minimum temperature and time can be addressed using an RFID time and temperature logging device. Such an RFID device is credit card sized and housed inside the body portion 102 by slotting into a plastic pouch attached to the inner wall 106. Other temperature devices could be used, although the advantage of the RFID system is that the temperature can be read via a wireless link to a reader on a collection lorry.

The composting apparatus 100 of the present invention maintains aerobic conditions. It will therefore remain substantially odour free during use. It can be left for weeks or months before collection is needed, making it ideal to match collection schedules. The invention is a closed container that is resistant to vermin, flies and birds, and can be used to compost category-3 mixed waste e.g. kitchen food waste. Domestic waste can be composted at the household and then be collected and taken to larger centralised composting sites.

The composting apparatus 100 can be wheeled to a municipal waste collection lorry for collection. Alternatively if the compost is to be used on site, it can be wheeled to a convenient place for tipping and emptying in a garden, saving forking out and transporting compost in a wheelbarrow.

When tipping the contents of the composting apparatus 100 into the lorry the inner lid 120 is first removed, thereby allowing the device to be emptied as normal. In another embodiment the inner cover member 120 is attached to the outer lid 116 and opens/closes as a single action.

It will be appreciated by persons skilled in the art that the above embodiment has been described by way of example only and not in any limitative sense, and that various alterations and modifications are possible without departure from the scope of the invention as defined by the appended claims.

## Claims

1. A composting apparatus comprising:
(i) a container defining at least one first volume for receiving material to enable aerobic composting of said material;
(ii) access means having a first condition for enabling said material to be placed in at least one said first volume and a second condition preventing access to the or each said first volume, and wherein gas at higher than ambient temperature resulting from composting of said material can exit from the container, and air at ambient temperature can enter the container, when said access means is in said second condition; and
(iii) air duct means for transporting air at ambient temperature from a first location within said container to a second location below at least one said first volume by means of gas at higher than ambient temperature, resulting from compositing of said material, rising in at least one said first volume.

2. An apparatus according to claim 1, wherein the container comprises a body having inner and outer walls having thermal insulation means arranged therebetween.

3. An apparatus according to claim 2, wherein the thermal insulation means comprises air sealed between said inner and outer walls.

4. An apparatus according to any one of the preceding claims, further comprising at least one cover member for covering at least one said first volume.

5. An apparatus according to claim 4, wherein at least one said cover member is moveable relative to the container.

6. An apparatus according to claim 5, wherein at least one said cover member is slidably mounted to said air duct means.

7. An apparatus according to any one of claims 4 to 6, wherein at least one said cover member comprises vent means for enabling gas at higher than ambient temperature to exit at least one said first volume.

8. An apparatus according to claim 7, wherein said vent means has at least one adjustable aperture.

9. An apparatus according to claim 8, wherein said vent means comprises at least one first vent member having a plurality of first apertures and at least one second vent member having at least one second aperture, wherein the position of at least one said first vent member and at least one said second vent member are adjustable relative to each other to enable the area of overlap of at least one pair of said first and second said apertures to be adjusted.

10. An apparatus according to any one of claims 4 to 10, wherein at least one said cover member is adapted to engage an inner wall of the container so as to form a seal therewith.

11. An apparatus according to any one of the preceding claims, further comprising at least one air flow member for enabling air to pass through at least one said first volume.

12. An apparatus according to claim 11, wherein at least one said air flow member comprise at least one corrugated plate.

13. An apparatus according to any one of the preceding claims, further comprising at least one perforated support for supporting material to be composted and to enable liquid to drain through the support.

14. An apparatus according to claim 14, wherein at least one said support defines a drainage cavity for receiving liquid below at least one said first volume.

15. An apparatus according to any one of the preceding claims, further comprising at least one wheel mounted to the container.
